# EUROPEAN PATENT APPLICATION

(11) **EP 0 718 554 A2**
(43) Date of publication of application: **26.06.1996**
(21) Application number: 95308165.0
(22) Date of filing: 14.11.1995
(51) Int. Cl.: F23L 7/00, F23J 15/00, F23C 9/08

(54) **A combustion apparatus**

(30) Priority: 20.12.1994 GB 9425691
(71) Applicant: The BOC Group plc, Windlesham Surrey GU20 6HJ (GB)
(72) Inventor: Graville, Stephen Rhys, Hunters Bar, Sheffield, S11 3LT (GB)
(74) Representative: Gough, Peter

(57) **Abstract**

A combustion apparatus 10 includes a moderator fluid supply M which is added to the fuel F to be combusted by concurrent injection therewith thereby to cause said moderator fluid and fuel to be intimately mixed immediately it issues from the burner 14. Such intimate mixture facilitates a high degree of temperature control within the flame itself, thereby protecting combustion components and at least reducing or eliminating thermal NOₓ.

## Description

The present invention relates to a combustion apparatus and relates particularly, but not exclusively, to a combustion apparatus having means for moderating the flame temperature so as to protect components exposed to the flame and prevent 'hot spots' forming thereon. It also relates to a fuel burner capable of reducing or eliminating atmospheric nitrogen and hence thermal NOₓ.

It is known to use a moderator fluid to reduce the temperature of the flame at various positions within the burner. Typical moderator fluids include steam and carbon dioxide. Presently, the moderator is injected into the combustion zone so as to surround the flame or at least form a layer of protection between the flame and a portion of the combustion zone to be protected. All moderators work on the principle that endothermic heat energy is taken from the flame so as to dissociate the components of the moderator from each other. In the case of CO₂, dissociation is to CO + ½O₂ whilst H₂O dissociates to H₂ + ½O₂. The dissociation is reversed by exothermic reaction at a later stage in the flame at which point the higher temperatures created thereby are less of a problem.

Many of the presently known fuel burners make use of air or oxygen enriched air as the oxidant. The atmospheric nitrogen present in such an oxidant is, at high temperatures, likely to form thermal NOₓ which is extremely environmentally undesirable.

It is an object of the present invention to reduce and possibly eliminate the above mentioned problems.

Accordingly, the present invention provides a method for substantially complete combustion of fuels comprising the steps of creating a stream of fuel in a combustion zone, directing an oxidising gas at said stream thereby to oxidise said fuel and combusting said fuel in said zone thereby to form a flame, in which a moderator gas is admixed with said fuel by concurrent injection therewith thereby to lower the combustion temperature of a first stage of said flame.

Preferably, the fuel is a liquid fuel and the moderator gas is added as a fuel atomising medium.

In a particularly advantageous arrangement, the moderator gas comprises carbon dioxide.

Preferably, the oxidant comprises substantially pure oxygen.

Advantageously, the combustion exhaust gases of said combustion process are treated so as to remove carbon dioxide therefrom and in which said carbon dioxide is recirculated back to said burner and forms at least part of said moderator gas.

Conveniently, said combustion exhaust gases are treated by first cooling said gas in a heat exchanger and then removing any water therefrom by passing said gas through a condenser thereby to produce a waste gas comprising substantially pure carbon dioxide.

According to a further aspect of the present invention there is provided a combustion apparatus for substantially complete combustion of fuels comprising a combustion zone, a fuel inlet for creating a stream of fuel within said combustion zone in excess of that required for stoichiometric combustion, first supply means for supplying an oxidising gas to said combustion zone, ignition means for igniting said fuel/oxidant mixture and creating a flame and second supply means for supplying a moderator fluid to said flame characterised by admixing means for concurrent injection of said moderator fluid and said fuel thereby to lower the combustion temperature of said flame by dissociation through endothermic reaction and then re-association through exothermic reaction of components of said moderator in respective upstream and downstream regions of the flame.

Preferably, said admixing means comprises co-axial fuel and moderator fluid inlets.

The fuel inlet may comprise a liquid fuel inlet.

Advantageously, the second supply means comprises carbon dioxide supply means.

Preferably, the apparatus includes means for removing carbon dioxide therefrom and for recirculating a portion of said removed carbon dioxide back to said burner so as to form at least part of said moderator gas.

Advantageously, said treatment means comprises a heat exchanger for cooling said exhaust gas and a condenser for removing water therefrom so as to produce a waste gas comprising substantially pure carbon dioxide.

The present invention will now be more particularly described by way of example only with reference to the accompanying drawings in which:
Figure 1 is a schematic representation of a schematic representation of a combustion apparatus according to the present invention;
Figure 2 is a diagrammatic representation of the fuel burner shown in Figure 1, and
Figure 3 is a further view of the fuel burner shown in Figures 1 and 2.

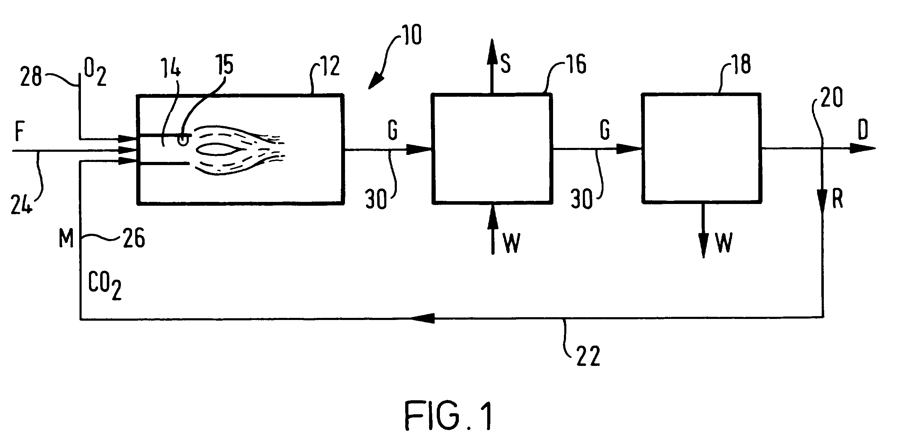

Referring to Figure 1, a combustion apparatus 10 comprises a combustion zone formed by combustion chamber 12, a burner 14 supplied with fuel F, an oxidising gas in the form of, for example, substantially pure O₂ and a moderator fluid such as CO₂. A heat exchanger in the form of waste heat boiler 16 and condenser 18 of conventional form are provided downstream of the combustion chamber. The heat exchanger 16 acts to remove heat from any exhaust gas G by, for example, heating incoming water W to produce steam S which may be used for power generating purposes in a manner well known and therefore not discussed therein. Condenser 18 removes water W from the exhaust gas thereby to produce a waste gas comprising a substantially pure gas of the type discussed later herein. If heavy fuel oils with high S concentration are being combusted then substantial amounts of SO₂ will be removed with the water. A 'T' junction 20 acts to split the gas into two components, the first of which R is directed back to the burner 14 via line 22 for use as a moderator, whilst the second D is sent for disposal in one of any number of conventional manners. The combustion zone may be a glass or metal melting furnace or any other similar apparatus in which fuel is combusted the heat or melt a material being processed.

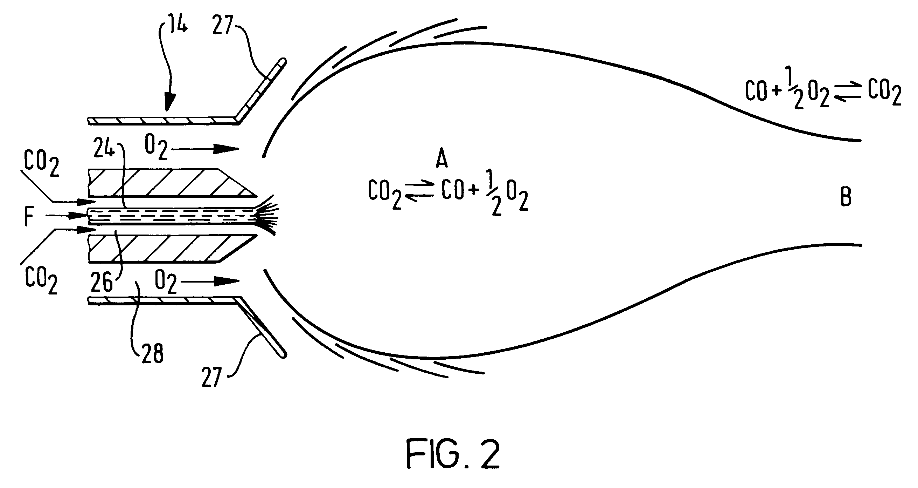

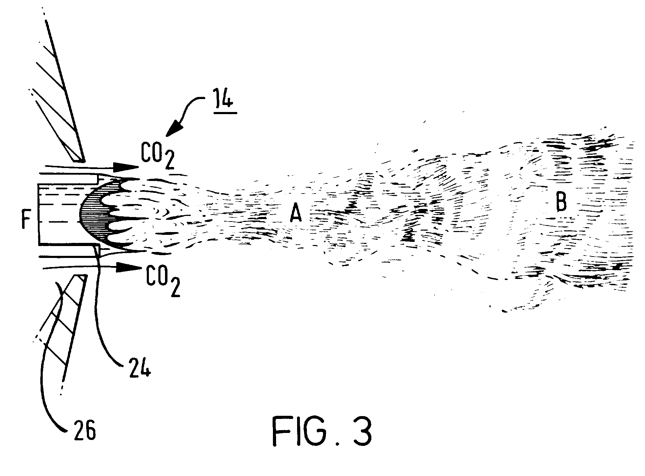

Referring now to Figures 2 and 3, it will be seen that the burner 14 comprises a fuel supply duct 24, a moderator fluid supply duct 26 and an oxidant supply duct 28. The fuel and moderator ducts 24, 26 are arranged side by side so as to facilitate the concurrent injection of fuel and moderator fluid such that the moderator fluid is intimately mixed with the fuel as soon as it exits the burner 14. The oxidant supply is conveniently positioned adjacent the moderator duct 26 but may be positioned slightly remote therefrom if desired as its position is somewhat less important to the present invention than that of the moderator fluid duct 26. In the particular arrangement shown in Figure 3, the moderator duct 26 comprises an annular passage immediately surrounding the fuel supply duct 24. This arrangement is particularly useful as it allows the moderator fluid to act as an atomising agent whenever the fuel is a liquid thereby ensuring intimate mixing of the moderator fluid and fuel. Even when the fuel is gas, this arrangement lends itself to efficient moderator/fuel mixing. A quarl region 27 formed by refractory material surrounds the burner 14 and acts to protect vulnerable parts of the combustion chamber 12.

In operation, fuel F and moderator fluid M are supplied to the burner 14 in a manner which allow intimate mixing thereof as fuel exits the burner and forms a plume of fuel/moderator gas to which oxygen is added.

The combined mixture forms a readily combustible cocktail which is ignited by ignition means 15 and is, in effect, split into a first, upstream, combustion region and a second, downstream, region denoted as A and B respectively.

The moderator fluid effectively acts to cool the flame temperature in the region A immediately adjacent the burner and other temperature sensitive components and prevents the production of thermal NOₓ through overheating. Cooling takes place as the moderator fluid dissociates through endothermic reaction and draws heat from the flame itself. Carbon dioxide, for example. dissociates to CO+½O₂. The components of the moderator fluid re-combine at a later stage in the flame (region B), where the temperature is less critical, through exothermic reaction. The two stage combustion process effectively reduces fuel NOₓ by a process known as 'staging'. Combustion exhaust gases G are extracted via line 30 and directed to heat exchanger 16 and condenser 18 as previously described herein for the removal of heat and water vapour therefrom thereby to produce a waste gas substantially comprising moderator fluid. Junction 20 acts to direct at least a portion of the waste gas back to the burner for use as a moderator fluid as previously described. Any unwanted waste is directed for disposal via D. In the case of waste carbon dioxide, disposal may be by deep sea deposit. This benefits disposal of CO₂ to meet future carbon tax. CO₂ can be cleaned and used in any one of a number of applications including the manufacture of drinks or in agriculture.

If air is used as the oxidising gas then one will be able to limit and possibly eliminate thermal NOₓ from the nitrogen present in the air by controlling the flame temperature so as to keep it below that at which thermal NOₓ is generated. Alternatively, if oxygen is used as the oxidant, no atmospheric nitrogen will be present and one may use the moderator as a pure temperature controller so as to prolong burner life and reducing or preventing refractory damage in the quarl surrounding the burner.

It will be appreciated that, at least when substantially pure oxygen and carbon dioxide are used as the oxidant and moderator respectively, the present invention provides a method and apparatus which is capable of substantially complete combustion of fuels in a controlled manner which avoids the production of environmentally undesirable NOₓ emissions and which reduces waste to a minimum by re-cycling at least a portion of the waste product as a moderator fluid.

## Claims

1. A method for substantially complete combustion of fuels characterised by the steps of creating a stream of fuel in a combustion zone, directing an oxidising gas at said stream thereby to oxidise said fuel and combusting said fuel in said combustion zone thereby to form a flame, in which a moderator gas is admixed with said fuel by concurrent injection therewith thereby to lower the combustion temperature of a first stage of said flame by dissociation through endothermic reaction of components of said moderator and then re-association through exothermic reaction in a downstream region.

2. A method as claimed in Claim 1 characterised in that said fuel is a liquid fuel and said moderator gas is added as a fuel atomising medium.

3. A method as claimed in Claim 1 or Claim 2 characterised in that said moderator gas comprises carbon dioxide.

4. A method as claimed in any one of Claims 1 to 3 characterised in that said oxidant comprises substantially pure oxygen.

5. A method as claimed in any one of Claims 1 to 4 characterised in that combustion exhaust gases of said combustion process are treated so as to remove carbon dioxide therefrom and in which said carbon dioxide is recirculated back to said burner and forms at least part of said moderator gas.

6. A method as claimed in Claim 5 characterised in that said combustion exhaust gases are treated by first cooling said gas in a heat exchanger and then removing any water therefrom by passing said gas through a condenser thereby to produce a waste gas comprising substantially pure carbon dioxide.

7. A combustion apparatus for substantially complete combustion of fuels characterised by a combustion zone, a fuel inlet for creating a stream of fuel within said combustion zone in excess of that required for stoichiometric combustion, first supply means for supplying an oxidising gas to said combustion zone, ignition means for igniting said fuel/oxidant mixture and creating a flame and second supply means for supplying a moderator fluid to said flame characterised by admixing means for concurrent injection of said moderator fluid and said fuel thereby to lower the combustion temperature of said flame by dissociation through endothermic reaction and then re-association through exothermic reaction of components of said moderator in respective upstream and downstream regions of the flame.

8. A combustion apparatus as claimed in Claim 7 in which said admixing means comprises co-axial fuel and moderator inlets.

9. A combustion apparatus as claimed in Claim 7 or Claim 8 in which said fuel inlet comprises a liquid fuel inlet.

10. A combustion apparatus as claimed in any one of Claims 7 to 9 in which said second supply means comprises carbon dioxide supply means.

11. A combustion apparatus as claimed in any one of Claims 7 to 10 including exhaust gas treatment means for removing carbon dioxide therefrom and for recirculating a portion of said removed carbon dioxide back to said burner so as to form at least part of said moderator gas.

12. A combustion apparatus as claimed in Claim 11 in which said treatment means comprises a heat exchanger for cooling said exhaust gas and a condenser for removing water therefrom so as to produce a waste gas comprising substantially pure carbon dioxide.
